# EUROPEAN PATENT SPECIFICATION

(11) **EP 3 002 906 B1**
(45) Date of publication and mention of the grant of the patent: **30.10.2019**
(21) Application number: 13886814.6
(22) Date of filing: 09.06.2013
(51) Int. Cl.: H04L 12/24

(54) **METHOD AND DEVICE FOR UPDATING RADIO NETWORK CONTROLLER**
VERFAHREN UND VORRICHTUNG ZUR AKTUALISIERUNG EINER FUNKNETZSTEUERUNG
MÉTHODE ET DISPOSITIF DE MISE À JOUR DE GESTIONNAIRE DE RÉSEAU RADIO

(43) Date of publication of application: 06.04.2016
(73) Proprietor: Huawei Technologies Co., Ltd., Longgang District Shenzhen, Guangdong 518129 (CN)
(72) Inventor: LIU, Xiaojun, Shenzhen Guangdong 518129 (CN)
(74) Representative: Maiwald Patent- und Rechtsanwaltsgesellschaft mbH
(86) International application number: PCT/CN2013/077062
(87) International publication number: WO 2014/198018

(56) References cited:
- WO-A1-2010/072253
- WO-A1-2012/065433
- CN-A- 1 719 413
- CN-A- 102 217 370
- CN-C- 100 446 607
- CN-C- 100 471 134
- US-A1- 2010 062 784

## Description

### TECHNICAL FIELD

The present invention relates to the field of communications technologies, and in particular, to a radio controller upgrade method and a device.

### BACKGROUND

As service demands increase, an operator needs to periodically upgrade devices such as a server or software. To not affect normal service running, the TL9000 standard requires that an annual interruption time of a service of a telecommunications device be less than 5 minutes. Therefore, it is required that an impact of software upgrade on service interruption is reduced to minimum. In the prior art, a hitless upgrade manner characterized by switching between active and standby dual planes is generally used, that is, internal resources of a device are divided into the active and standby dual planes during an upgrade; when a service runs on the active plane, the standby plane is first upgraded; and after the standby plane is successfully upgraded, the standby plane takes over the service from the active plane, and the active plane is then upgraded. After both the active and standby dual planes are successfully upgraded, the upgraded active plane normally provides the service.

During implementation of the present invention, the inventor finds that the prior art has at least the following problems: In the hitless upgrade manner in the prior art, because a state in which an interface runs and another interface is upgraded always exists, a service that has not been completed is interrupted during switching between active and standby dual planes, and an interruption time is long when a rollback is required in a case of an unsuccessful upgrade, which affects system reliability. In addition, this dual plane configuration manner causes a high cost of hardware redundancy configuration.

WO 2012/065433A1 discloses a method for enhancing the reliability of a Radio Network Controller, RNC. The therein described method includes configuring a backup RNC for a RNC to which a NodeB currently belongs, switching the NodeB to the backup RNC from the RNC to which it belongs when the NodeB is decided to be switched according to a switch policy, synchronizing the configuration data, which relates to the NodeB and is on the RNC to which the NodeB belongs, to the backup RNC.

which the NodeB belongs, to the backup RNC.

CN 102217370A discloses a method for processing switching of a control right of a base station. The therein described method includes the following steps: a target slave homing RNC executes an audit flow; the target slave homing RNC sends a cell setup request message to the base station, where the cell setup request message carries a logical cell parameter and indication information used to indicate that the message is triggered due to switching of the control right of the base station; the target slave homing RNC receives a cell setup success message sent by the base station after the base station sets up the new logical cell.

### SUMMARY

The present invention is defined in the independent claims. The dependent claims define embodiments of the present invention.

To ensure normal service running in an upgrade process, embodiments of the present invention provide a radio controller upgrade method. The technical solutions are as follows:
Herein described is a radio controller upgrade method, where the method includes: determining, by a first RNC (Radio Network Controller, radio network controller) to be upgraded, a second RNC from multiple secondary homing RNCs, where the first RNC provides a service for a base station, and the multiple secondary homing RNCs maintain transmission links with the base station; switching, by the first RNC, control over the base station to the second RNC, so that the second RNC sends a cell setup message to the base station according to a cell parameter configured on the second RNC, so that the base station switches control over an established cell to the second RNC; and when the control over the cell established by the base station is switched to the second RNC, performing, by the first RNC, a software upgrade procedure.

Herein described is, the method further includes: after the upgrade of the first RNC is finished, sending an upgrade finish message to the second RNC, so that the base station is switched back to the first RNC in batches.

Herein described is, before the determining, by a first RNC to be upgraded, a second RNC according to current load statuses of multiple secondary homing RNCs, the method further includes: synchronizing, by the first RNC and the multiple secondary homing RNCs, configuration information of the base station of the first RNC, where the configuration information of the base station includes at least a parameter of the cell established by the base station.

Herein described is, before the performing, by the first RNC, a software upgrade procedure, the method further includes: decreasing, by the first RNC, a load sharing threshold of the first RNC; when receiving a service request when load exceeds the current load sharing threshold of the first RNC, determining, by the first RNC, a third RNC according to current load statuses of the multiple secondary homing RNCs; sending, by the first RNC, a resource application request to the third RNC, where the resource application request carries service information of the service request; and when a resource application request response sent by the third RNC is received, forwarding the service request to the third RNC, so that the third RNC processes the service request.

Herein described is a radio controller upgrade method, where the method includes: obtaining, by a second radio controller RNC, control over a base station homed to a first RNC to be upgraded, where the first RNC provides a service for the base station, and the second RNC maintains a transmission link with the base station; and controlling, by the second RNC according to a cell parameter configured on the second RNC, the base station to switch control over an established cell to the second RNC, so that when cell control switching is completed, the first RNC performs a software upgrade procedure.

Herein described is, the controlling, by the second RNC according to a cell parameter configured on the second RNC, the base station to switch control over an established cell to the second RNC includes: sending, by the second RNC, a cell setup message to the base station according to the cell parameter configured on the second RNC, where the cell setup message carries the cell parameter configured on the second RNC; receiving, by the second RNC, a cell setup success message sent by the base station, where the cell setup success message is sent when the base station switches cell control to the second RNC when determining that the cell parameter configured on the second RNC is the same as a parameter of the cell established by the base station; and setting up, by the second RNC, a common channel, and sending a system message update request to the base station through the common channel, so that when receiving the system message update request, the base station deletes an existing system message, and completes switching of the base station from the first RNC to the second RNC.

Herein described is, before the obtaining, by a second radio controller RNC, control over a base station homed to a first RNC to be upgraded, the method further includes: acquiring, by the second RNC, configuration information of the base station homed to the first RNC, where the configuration information of the base station includes at least a parameter of the cell established by the base station.

Herein described is, the method further includes: receiving, by the second RNC, a resource application request sent by the first RNC, where the resource application request carries service request information, and the resource application request is sent by the first RNC when load exceeds a load sharing threshold of the first RNC; determining, by the second RNC according to load and a load sharing threshold of the second RNC, whether the second RNC can carry a service corresponding to the service request information; and if the second RNC can carry the service corresponding to the service request information, returning a resource application request response to the first RNC; and receiving, by the second RNC, a service request forwarded by the first RNC, and processing the service request.

Herein described is a device, including: a transmitter, a memory, and a processor, where the transmitter and the memory are separately connected to the processor, the memory stores program code, and the processor is configured to invoke the program code to perform the following operations:
determining, by a local end, a second RNC from multiple secondary homing RNCs, where the local end provides a service for a base station, and the multiple secondary homing RNCs maintain transmission links with the base station;
switching, by the local end, control over the base station to the second RNC, so that the second RNC sends a cell setup message to the base station according to a cell parameter configured on the second RNC, so that the base station switches control over an established cell to the second RNC; and
when the control over the cell established by the base station is switched to the second RNC, performing, by the local end, a software upgrade procedure.

Herein described is a device, including: a receiver, a memory, and a processor, where the receiver and the memory are separately connected to the processor, the memory stores program code, and the processor is configured to invoke the program code to perform the following operations:
obtaining, by a local end, control over a base station homed to a first RNC to be upgraded, where the first RNC provides a service for the base station, and the local end maintains a transmission link with the base station; and
controlling, by the local end, the base station to switch control over an established cell to the local end according to a cell parameter configured on the local end, so that when cell control switching is completed, the first RNC performs a software upgrade procedure.

Beneficial effects of the technical solutions provided in the embodiments of the present invention are as follows:
A service of an RNC to be upgraded is quickly switched to another RNC in a system by means of control switching, so that the another RNC can continue to provide a service in an upgrade process, and a hitless service is ensured in the upgrade process without hardware redundancy configuration. In addition, because quick switching consumes a short time, an annual interruption time of a service of an RNC is reduced, and system reliability is improved.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of a radio controller upgrade method according to an embodiment of the present invention;
FIG. 2 is a flowchart of a radio controller upgrade method according to an embodiment of the present invention;
FIG. 3 is a flowchart of a radio controller upgrade method according to an embodiment of the present invention;
FIG. 4 is a schematic structural diagram of a device according to an embodiment of the present invention; and
FIG. 5 is a schematic structural diagram of a device according to an embodiment of the present invention.

### DESCRIPTION OF EMBODIMENTS

To make the objectives, technical solutions, and advantages of the present invention clearer, the following further describes the embodiments of the present invention in detail with reference to the accompanying drawings.

For ease of subsequent description, only a system involved in the embodiments of the present invention is described herein.

The system includes multiple RNCs and multiple base stations, and a base station is homed to multiple RNCs in the system, where a first RNC is a primary homing RNC of the base station, and other RNCs are referred to as secondary homing RNCs of the NodeB base station. In a non-upgrade situation, the primary homing provides a service for the NodeB base station, and the other secondary homing RNCs merely configure transmission links.

Further, the NodeB base station provides multiple interfaces separately connected to multiple RNCs, that is, the NodeB sets up, with each RNC, an NCP (NodeB Control Port, NodeB control port), a CCP (Communication Control Port, communication control port), an OM (Operation Management, operation and maintenance management) management channel and a user-plane transmission link that are available. Logical links of the interfaces may be carried on independent physical links, or may be carried on a same physical link. The independent physical links can avoid a single-point failure in transmission on this section and improve transmission reliability. If redundancy cannot be implemented physically, the logical links may be carried on a same physical link, different logical links are distinguished for exchange on a network side, the different logical links are separated, and data is separately transmitted to different RNCs. Configuration information of the NodeB base station is synchronized among RNCs, and homing check is periodically performed to avoid a homing mistake of the base station.

A radio controller upgrade method involved in an embodiment of the present invention is introduced below with reference to the foregoing system architecture.

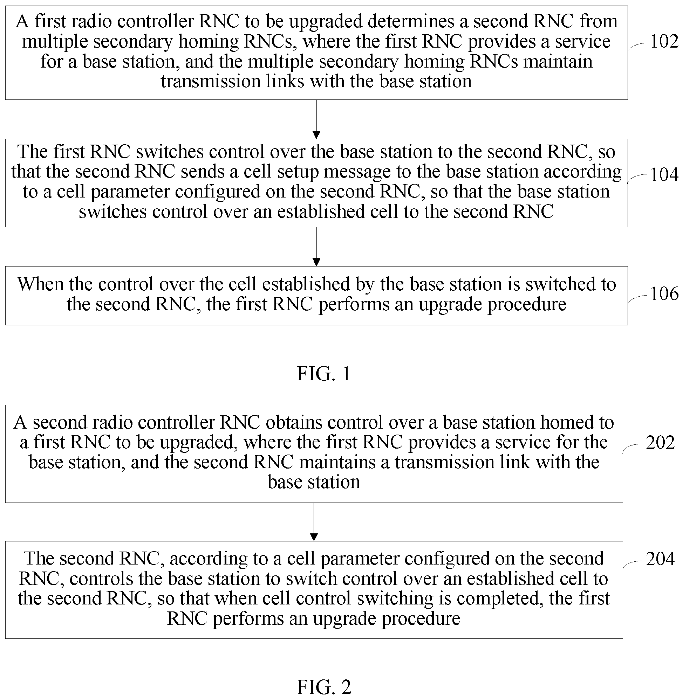

FIG. 1 is a flowchart of a radio controller upgrade method according to an embodiment of the present invention. This embodiment of the present invention is executed by a first RNC to be upgraded. Referring to FIG. 1, the method includes:
102: A first RNC to be upgraded determines a second RNC from multiple secondary homing RNCs, where the first RNC provides a service for a base station, and the multiple secondary homing RNCs maintain transmission links with the base station.

The first RNC to be upgraded is an RNC that is specified on an operator side and currently needs to be upgraded. The second RNC is one or more RNCs with minimum current load that are selected according to load statuses of RNCs in a current system, or one or more RNCs with a high priority that are selected according to priority configuration of multiple RNCs. In this embodiment of the present invention, a case in which an RNC with minimum current load is selected is used as an example.

The first RNC and the second RNC are connected through a private interface, RNCs are interconnected to each other, and the RNCs synchronize, with each other, respective resource state information and cell parameters of base stations served by the RNCs. The resource state information includes, but is not limited to, information such as a load sharing threshold and a current load status of an RNC. A cell parameter of a base station includes, but is not limited to, frequency information, a cell identifier (ID), a location area, a routing area, domain information, PCCPCH transmit power, common-channel-related information, system-message-related information, and the like.

Specifically, based on the foregoing connection, the first RNC to be upgraded determines the load statuses of the RNCs according to the resource state information of the RNCs in the current system, and selects one or more RNCs with minimum current load from the RNCs as the second RNC.

It should be noted that during switching of the base station, the first RNC performs selection according to priorities, load statuses, and the like of other RNCs in the system, and distributes, on the RNCs in the entire system in a balanced manner, base stations that are homed to the first RNC, which does not affect an existing service.

104: The first RNC switches control over the base station to the second RNC, so that the second RNC sends a cell setup message to the base station according to a cell parameter configured on the second RNC, so that the base station switches control over an established cell to the second RNC.

The first RNC negotiates control with the second RNC, and switches control over the base station to the second RNC.

106: When the control over the cell established by the base station is switched to the second RNC, the first RNC performs an upgrade procedure.

A service of an RNC to be upgraded is quickly switched to another RNC in a system by means of control switching, so that the another RNC can continue to provide a service in an upgrade process, and a hitless service is ensured in the upgrade process.

Optionally, based on the technical solution in the embodiment shown in FIG. 1, the method further includes: after the upgrade of the first RNC is finished, sending an upgrade finish message to the second RNC, so that the base stations are switched back to the first RNC in batches. After all base stations are successfully switched, an upgrade of the RNC is performed, and after the upgrade succeeds, the base stations are gradually switched back still by means of quick switching, and start to normally provide a service. During switchback of the base stations, the base stations need to be switched back to the original primary homing first RNC in batches according to a rule, to avoid impact on the first RNC that is caused by a traffic burst.

Optionally, based on the technical solution in the embodiment shown in FIG. 1, before the determining, by a first RNC to be upgraded, a second RNC from multiple secondary homing RNCs, the method further includes: synchronizing, by the first RNC and the multiple secondary homing RNCs, configuration information of the base station of the first RNC, where the configuration information of the base station includes at least a parameter of the cell established by the base station. The configuration information of the base station is synchronized among primary and secondary homing RNCs, and the synchronization may be implemented by periodically sending, by the first RNC as the primary RNC, the configuration information of the base station, and periodically performing homing check to avoid a homing mistake of the base station.

Optionally, based on the technical solution in the embodiment shown in FIG. 1, before the "performing, by the first RNC, an upgrade procedure" in step 106, the method further includes the following steps 105a to 105d.

105a: The first RNC decreases a load sharing threshold of the first RNC.

In a process of switching control over the base station, or within any time period after it is determined that the first RNC is an RNC to be upgraded, the first RNC starts to gradually decrease the load sharing threshold of the first RNC. The first RNC adjusts the load sharing threshold of the first RNC in multiple manners as follows: For example, the load sharing threshold is adjusted to zero at one time, and in this case, the first RNC instantly does not receive a new task any longer, and forwards all new services to the second RNC; or the load sharing threshold may be gradually decreased until it is zero, and in this case, new services are gradually forwarded to the second RNC.

Specifically, each RNC in the system has an adjustable load sharing threshold, and it may be set, by using the load sharing threshold, whether a service of the RNC needs to be shared with another RNC, or it may be set, by using the load sharing threshold, whether the RNC can share a service of another RNC.

105b: When receiving a service request when load exceeds the current load sharing threshold of the first RNC, the first RNC determines a third RNC according to current load statuses of the multiple secondary homing RNCs.

It should be noted that the third RNC in step 105b and the second RNC in the foregoing steps may be a same device, or may be different devices. In addition, in this embodiment of the present invention, it may be determined that at least one RNC is used as an object that shares load of the first RNC, and the load of the first RNC is distributed in the entire system, to avoid severe load impact on an RNC.

105c: The first RNC sends a resource application request to the third RNC, where the resource application request carries service information of the service request.

The resource application request is used to notify the third RNC of a type, a resource needed, and the like of the service request, and request the third RNC to share the service request.

105d: When a resource application request response sent by the third RNC is received, forward the service request to the third RNC, so that the third RNC processes the service request.

When determining, according to a load status and a load sharing threshold of the third RNC, that the service can be carried, the third RNC sends the resource application request response to the first RNC, and in this case, the first RNC forwards the service request to the third RNC, so that the third RNC processes the service request when receiving the service request, thereby sharing a newly accessed service for the first RNC.

As the load sharing threshold of the first RNC is constantly decreased, all newly accessed services are shared to other RNCs in the system, and the first RNC to be upgraded no longer processes a new service.

Further, if receiving a reject message for the resource application request, the first RNC determines that the third RNC cannot carry the service request, and the first RNC reselects an RNC as the third RNC, and repeats the resource request, until the first RNC finds a third RNC that can carry the service request.

A service of an RNC to be upgraded is quickly switched to another RNC in a system by means of control switching, so that the another RNC can continue to provide the service in an upgrade process, and a hitless service is ensured in the upgrade process without hardware redundancy configuration. In addition, because quick switching consumes a short time, an annual interruption time of a service of an RNC is reduced, and system reliability is improved. Further, configuration information is synchronized and load is shared among multiple RNCs in the system, so that the RNCs can share a resource, during an upgrade, a new service received by an RNC being upgraded is transferred to another RNC by means of load sharing, to continue processing, and a hitless service is implemented in the upgrade process without hardware redundancy configuration.

FIG. 2 is a flowchart of a radio controller upgrade method according to an embodiment of the present invention. This embodiment of the present invention is executed by a second RNC. Referring to FIG. 2, the method includes:
202: A second radio controller RNC obtains control over a base station homed to a first RNC to be upgraded, where the first RNC provides a service for the base station, and the second RNC maintains a transmission link with the base station.

The first RNC negotiates control with the second RNC, and switches control over the base station to the second RNC.

204: The second RNC controls, according to a cell parameter configured on the second RNC, the base station to switch control over an established cell to the second RNC, so that when cell control switching is completed, the first RNC performs an upgrade procedure.

The second RNC may notify the first RNC of completion of control switching, to trigger an upgrade procedure for the first RNC.

Optionally, based on the technical solution in the embodiment shown in FIG. 2, the "controlling, by the second RNC according to a cell parameter configured on the second RNC, the base station to switch control over an established cell to the second RNC" in step 204 includes 204a to 204c.

204a: The second RNC sends a cell setup message to the base station according to the cell parameter configured on the second RNC, where the cell setup message carries the cell parameter configured on the second RNC.

After the second RNC acquires control over the base station, the first RNC initiates a procedure for deleting a common channel, but does not send a cell deletion message to the base station, and in this case, a cell on a base station side still normally works.

The second RNC sends the cell setup message to the base station according to a cell parameter obtained by means of synchronization among RNCs, to initiate a cell setup procedure. It should be noted that the cell setup procedure is a cell setup procedure triggered by switching of control over the base station, and the procedure may be identified by a private information element carried in the cell setup message.

204b: The second RNC receives a cell setup success message sent by the base station, where the cell setup success message is sent when the base station switches cell control to the second RNC when determining that the cell parameter configured on the second RNC is the same as a parameter of the cell established by the base station.

When the base station receives the cell setup message, and the cell setup message is a cell setup message triggered by switching of control over the base station, the base station checks whether the cell parameter carried in the message is the same as the parameter of the cell established by the base station; and if yes, the base station sends the cell setup success message to the second RNC, and switches cell control to the second RNC; otherwise, the base station sends a cell setup failure message to the second RNC, so that the second RNC performs processing according to a normal cell setup procedure.

204c: The second RNC sets up a common channel, and sends a system message update request to the base station through the common channel, so that when receiving the system message update request, the base station deletes an existing system message, and completes switching of the base station from the first RNC to the second RNC.

When the base station NodeB receives the system message update request sent by the second RNC, if the system message update request is a first system message update request for the base station after switching of cell control, the base station deletes an existing system message, performs updating according to the received system message, and performs broadcasting on a broadcast channel, to complete quick switching of the base station from the primary homing first RNC to the secondary homing second RNC. Cell re-setup in the foregoing procedure consumes a time less than 5s, and a service is basically hitless.

Optionally, based on the technical solution in the embodiment shown in FIG. 2, before the "obtaining, by a second radio controller RNC, control over a base station homed to a first RNC to be upgraded" in step 202, the method further includes: acquiring, by the second RNC, configuration information of the base station homed to the first RNC, where the configuration information of the base station includes at least a parameter of the cell established by the base station. The configuration information of the base station is synchronized among primary and secondary homing RNCs, and the synchronization may be implemented by periodically sending, by the first RNC as the primary RNC, the configuration information of the base station, and periodically performing homing check to avoid a homing mistake of the base station.

Optionally, based on the technical solution in the embodiment shown in FIG. 2, the method further includes step 206 as follows:
206a: The second RNC receives a resource application request sent by the first RNC, where the resource application request carries service request information, and the resource application request is sent by the first RNC when load exceeds a load sharing threshold of the first RNC.
206b: The second RNC determines, according to load and a load sharing threshold of the second RNC, whether the second RNC can carry a service corresponding to the service request information; and if the second RNC can carry the service corresponding to the service request information, the second RNC returns a resource application request response to the first RNC.
In step 206c, when receiving the resource application request, the second RNC determines, according to resource state information of the second RNC and a service message of the service request, whether the second RNC can carry the service request. Specifically, a remaining resource of the second RNC is acquired according to the current load and the load sharing threshold of the second RNC, and a resource needed by the service request is acquired according to the service message of the service request; it is determined whether the remaining resource is more than or equal to the resource needed; and if the remaining resource is more than or equal to the resource needed, it is considered that the second RNC can carry the service request, and the resource application request response is returned to the first RNC; otherwise, it is considered that the second RNC cannot carry the service request, and a reject message for the resource application request is returned to the first RNC.

206c: The second RNC receives a service request forwarded by the first RNC, and processes the service request.

A service of an RNC to be upgraded is quickly switched to another RNC in a system by means of control switching, so that the another RNC can continue to provide the service in an upgrade process, and a hitless service is ensured in the upgrade process without hardware redundancy configuration. In addition, because quick switching consumes a short time, an annual interruption time of a service of an RNC is reduced, and system reliability is improved. Further, configuration information is synchronized and load is shared among multiple RNCs in the system, so that the RNCs can share a resource, during an upgrade, a new service received by an RNC being upgraded is transferred to another RNC by means of load sharing, to continue processing, and a hitless service is implemented in the upgrade process without hardware redundancy configuration.

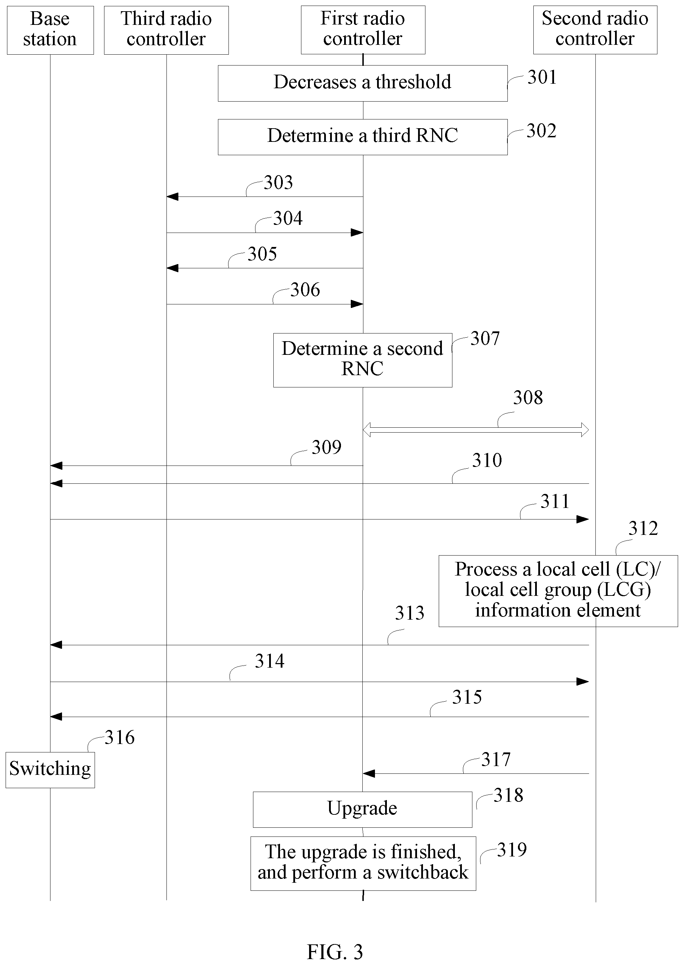

FIG. 3 is a flowchart of a radio controller upgrade method according to an embodiment of the present invention. In this embodiment of the present invention, interaction among a first RNC, a second RNC, and a base station is merely used as an example for description. Referring to FIG. 3, the interaction procedure includes:
301: A first RNC to be upgraded decreases a load sharing threshold of the first RNC.
302: When receiving a service request when load exceeds the current load sharing threshold of the first RNC, the first RNC determines a third RNC according to current load statuses of multiple secondary homing RNCs.
303: The first RNC sends a resource application request to the third RNC, where the resource application request carries service information of the service request.
304: The third RNC determines, according to load and a load sharing threshold of the third RNC, whether the third RNC can carry a service corresponding to the service request information; and if the second RNC can carry the service corresponding to the service request information, the third RNC returns a resource application request response to the first RNC.
305: When the resource application request response sent by the third RNC is received, forward the service request to the third RNC, so that the third RNC processes the service request.
306: The third RNC receives the service request forwarded by the first RNC, and processes the service request.

After all new services are forwarded to the third RNC, a switching procedure for the base station is started.

307: The first RNC determines a second RNC according to current load statuses of multiple secondary homing RNCs, where the first RNC provides a service for a base station, and the multiple secondary homing RNCs maintain transmission links with the base station.

308: The first RNC switches control over the base station to the second RNC.

309: The first RNC initiates a procedure for deleting a common channel.

310: When acquiring control over the base station, the second RNC waits until the procedure, of the first RNC, for deleting a common channel is finished, and sends an audit instruction to the base station.

311: When receiving the audit instruction, the base station sends an audit response message to the second RNC.

312: The second RNC receives the audit response message of the base station, and processes a local cell (LC)/local cell group (LCG) information element.

313: The second RNC sends a cell setup message to the base station according to a local cell reported by the base station and a cell parameter configured on the second RNC, where the cell setup message carries the cell parameter configured on the second RNC, the cell setup message carries a private information element, and the private information element is used to identify that the cell setup procedure is a cell setup procedure triggered by control switching.

314: When the base station receives the cell setup message, and the cell setup message is a cell setup message triggered by switching of control over the base station, the base station checks whether the cell parameter carried in the message is the same as a parameter of the cell established by the base station; and if yes, the base station sends a cell setup success message to the second RNC, and switches cell control to the second RNC.

In this embodiment of the present invention, an example in which the cell parameter carried in the message is the same as the parameter of the cell established by the base station is merely used for description. If the cell parameter carried in the message is different from the parameter of the cell established by the base station, the base station sends a cell setup failure message to the second RNC, so that the second RNC performs processing according to a normal cell setup procedure.

315: When the second RNC receives the cell setup success message sent by the base station, the second RNC sets up a common channel, and sends a system message update request to the base station through the common channel.

316: When receiving the system message update request, the base station determines whether the system message update request is a first system message update request after control switching; and if yes, the base station deletes an existing system message, performs updating according to the newly received system message update request, and performs broadcasting on a broadcast channel, to complete switching of the base station from the first RNC to the second RNC.

Optionally, in the foregoing control switching process, the base station maintains a signaling link with the first RNC, that is, when receiving a signaling link removing request of the first RNC, the base station temporarily does not send an address removing request to an upper layer. When receiving the cell setup success message sent by the base station, the second RNC sends, to the base station, a message for requesting signaling link setup, so that the base station sets up a signaling link with the second RNC, and simultaneously removes the signaling link between the base station and the first RNC. Preferably, because re-setup of the signaling link between the base station and the second RNC refers to modification based on the signaling link between the base station and the first RNC, that is, an address part of the signaling link between the base station and the first RNC is directly changed to the second RNC, signaling traffic is greatly decreased in this signaling link re-setup process.

317: The second RNC sends a switching success message to the first RNC.

318: When receiving the switching success message, the first RNC performs an upgrade procedure.

319: When an upgrade of the first RNC is finished, switch base stations control switched to the second RNC back to the first RNC in batches.

For ease of description of the procedure, in this embodiment of the present invention, an example in which the third RNC and the second RNC are different devices is merely used for description, and in an actual application, the third RNC and the second RNC may be a same device.

A service of an RNC to be upgraded is quickly switched to another RNC in a system by means of control switching, so that the another RNC can continue to provide the service in an upgrade process, and a hitless service is ensured in the upgrade process without hardware redundancy configuration. In addition, because quick switching consumes a short time, an annual interruption time of a service of an RNC is reduced, and system reliability is improved. Further, configuration information is synchronized and load is shared among multiple RNCs in the system, so that the RNCs can share a resource, during an upgrade, a new service received by an RNC being upgraded is transferred to another RNC by means of load sharing, to continue processing, and a hitless service is implemented in the upgrade process without hardware redundancy configuration.

This technical solution uses a WCDMA radio access network as an example, but is also applicable to a GSM network, a TD-SCDMA network, and an LTE network.

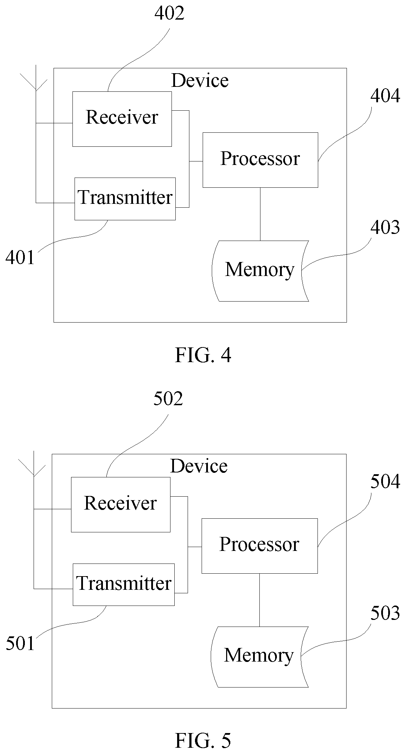

FIG. 4 is a schematic structural diagram of a device according to an embodiment of the present invention, and this embodiment of the present invention is executed by a first RNC. As shown in FIG. 4, the device includes: a transmitter 401, a receiver 402, a memory 403, and a processor 404, where the transmitter 401, the receiver 402, and the memory 403 are separately connected to the processor 404, the memory 403 stores program code, and the processor 404 is configured to invoke the program code to perform the following operations: determining, by a local end, a second RNC from multiple secondary homing RNCs, where the local end provides a service for a base station, and the multiple secondary homing RNCs maintain transmission links with the base station; switching, by the local end, control over the base station to the second RNC, so that the second RNC sends a cell setup message to the base station according to a cell parameter configured on the second RNC, so that the base station switches control over an established cell to the second RNC; and when the control over the cell established by the base station is switched to the second RNC, performing, by the local end, an upgrade procedure.

Optionally, the processor 404 is further configured to invoke the program code to perform the following operation: after the upgrade of the local end is finished, sending an upgrade finish message to the second RNC by using the transmitter 401, so that the base stations are switched back to the local end in batches.

Optionally, the processor 404 is further configured to invoke the program code to perform the following operation: synchronizing, by the local end and the multiple secondary homing RNCs, configuration information of the base station of the local end, where the configuration information of the base station includes at least a parameter of the cell established by the base station.

Optionally, the processor 404 is further configured to invoke the program code to perform the following operations: decreasing, by the local end, a load sharing threshold of the local end; when the local end receives a service request when load exceeds the current load sharing threshold of the local end, determining a third RNC according to current load statuses of the multiple secondary homing RNCs; sending, by the local end, a resource application request to the third RNC by using the transmitter 401, where the resource application request carries service information of the service request; and when a resource application request response sent by the third RNC is received by using the receiver 402, forwarding the service request to the third RNC, so that the third RNC processes the service request.

FIG. 5 is a schematic structural diagram of a device according to an embodiment of the present invention, and this embodiment of the present invention is executed by a second RNC. As shown in FIG. 5, the device includes: a transmitter 501, a receiver 502, a memory 503, and a processor 504, where the transmitter 501, the receiver 502, and the memory 503 are separately connected to the processor 504, the memory 503 stores program code, and the processor 504 is configured to invoke the program code to perform the following operations: obtaining, by a local end, control over a base station homed to a first RNC to be upgraded, where the first RNC provides a service for the base station, and the local end maintains a transmission link with the base station; and controlling, by the local end, the base station to switch control over an established cell to the local end according to a cell parameter configured on the local end, so that when cell control switching is completed, the first RNC performs an upgrade procedure.

Optionally, the processor 504 is further configured to invoke the program code to perform the following operations: sending, by the local end, a cell setup message to the base station by using the transmitter 501 according to the cell parameter configured on the local end, where the cell setup message carries the cell parameter configured on the local end; receiving, by the local end, a cell setup success message sent by the base station by using the receiver 502, where the cell setup success message is sent when the base station switches cell control to the local end when determining that the cell parameter configured on the local end is the same as a parameter of the cell established by the base station; and setting up, by the local end, a common channel, and sending a system message update request to the base station through the common channel, so that when receiving the system message update request, the base station deletes an existing system message, and completes switching of the base station from the first RNC to the local end.

Optionally, the processor 504 is further configured to invoke the program code to perform the following operation: acquiring, by the local end by using the receiver 502, configuration information of the base station homed to the first RNC, where the configuration information of the base station includes at least a parameter of the cell established by the base station.

Optionally, the processor 504 is further configured to invoke the program code to perform the following operations: receiving, by the local end by using the receiver 502, a resource application request sent by the first RNC, where the resource application request carries service request information, and the resource application request is sent by the first RNC when load exceeds a load sharing threshold of the first RNC; determining, by the local end according to load and a load sharing threshold of the local end, whether the local end can carry a service corresponding to the service request information; and if the second RNC can carry the service corresponding to the service request information, returning a resource application request response to the first RNC by using the transmitter 501; and receiving, by the local end by using the receiver 502, a service request forwarded by the first RNC, and processing the service request.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, or an optical disc.

The foregoing descriptions are merely exemplary embodiments of the present invention, but are not intended to limit the present invention. Any modification, equivalent replacement, and improvement made without departing from the principle of the present invention shall fall within the protection scope of the present invention.

## Claims

1. A radio network controller upgrade method, **characterized in that** the method comprises:
determining (102), by a first radio network controller, RNC, to be upgraded, a second RNC from multiple secondary homing RNCs, wherein the first RNC provides a service for a base station, and the multiple secondary homing RNCs maintain transmission links with the base station;
switching (104), by the first RNC, control over the base station to the second RNC, so that the second RNC sends a cell setup message to the base station according to a cell parameter configured on the second RNC, so that the base station switches control over an established cell to the second RNC; and
when the control over the cell established by the base station is switched to the second RNC, performing (106), by the first RNC, a software upgrade procedure.

2. The method according to claim 1, wherein the method further comprises:
after the software upgrade procedure of the first RNC is finished, sending an upgrade finish message to the second RNC, so that the control over the base station is switched back to the first RNC in batches.

3. The method according to claim 1, wherein before the determining, by a first radio network controller, RNC, to be upgraded, a second RNC from multiple secondary homing RNCs, the method further comprises:
synchronizing, by the first RNC and the multiple secondary homing RNCs, configuration information of the base station of the first RNC, wherein the configuration information of the base station comprises at least a parameter of the cell established by the base station.

4. The method according to claim 1, wherein before the performing, by the first RNC, a software upgrade procedure, the method further comprises:
decreasing, by the first RNC, a load sharing threshold of the first RNC;
when receiving a service request when load exceeds the current load sharing threshold of the first RNC, determining, by the first RNC, a third RNC according to current load statuses of the multiple secondary homing RNCs;
sending, by the first RNC, a resource application request to the third RNC, wherein the resource application request carries service information of the service request; and
when a resource application request response sent by the third RNC is received, forwarding the service request to the third RNC, so that the third RNC processes the service request.

5. A radio network controller upgrade method, **characterized in that** the method comprises:
obtaining (202), by a second radio network controller, RNC, control over a base station homed to a first RNC to be upgraded, wherein the first RNC provides a service for the base station, and the second RNC maintains a transmission link with the base station; and
controlling (204), by the second RNC according to a cell parameter configured on the second RNC, the base station to switch control over an established cell to the second RNC, so that when cell control switching is completed, the first RNC performs a software upgrade procedure.

6. The method according to claim 5, wherein the controlling, by the second RNC according to a cell parameter configured on the second RNC, the base station to switch control over an established cell to the second RNC comprises:
sending, by the second RNC, a cell setup message to the base station according to the cell parameter configured on the second RNC, wherein the cell setup message carries the cell parameter configured on the second RNC;
receiving, by the second RNC, a cell setup success message sent by the base station, wherein the cell setup success message is sent when the base station switches cell control to the second RNC when determining that the cell parameter configured on the second RNC is the same as a parameter of the cell established by the base station; and
setting up, by the second RNC, a common channel, and sending a system message update request to the base station through the common channel, so that when receiving the system message update request, the base station deletes an existing system message, and completes switching of the control over the base station from the first RNC to the second RNC.

7. The method according to claim 5, wherein before the obtaining, by a second radio network controller, RNC, control over a base station homed to a first RNC to be upgraded, the method further comprises:
acquiring, by the second RNC, configuration information of the base station homed to the first RNC, wherein the configuration information of the base station comprises at least a parameter of the cell established by the base station.

8. The method according to claim 5, wherein the method further comprises:
receiving, by the second RNC, a resource application request sent by the first RNC, wherein the resource application request carries service request information, and the resource application request is sent by the first RNC when load exceeds a load sharing threshold of the first RNC;
determining, by the second RNC according to load and a load sharing threshold of the second RNC, whether the second RNC can carry a service corresponding to the service request information; and if the second RNC can carry the service corresponding to the service request information, returning a resource application request response to the first RNC; and
receiving, by the second RNC, a service request forwarded by the first RNC, and processing the service request.

9. A device, **characterized by** comprising: a transmitter (401), a receiver (402), a memory (403), and a processor (404), wherein the transmitter (401), the receiver (402), and the memory (403) are separately connected to the processor (404), the memory (403) stores program code, and the processor (404) is configured to invoke the program code to perform the following operations:
determining, by a local end, a second radio network controller, RNC, from multiple secondary homing RNCs, wherein the local end provides a service for a base station, and the multiple secondary homing RNCs maintain transmission links with the base station;
switching, by the local end, control over the base station to the second RNC, so that the second RNC sends a cell setup message to the base station according to a cell parameter configured on the second RNC, so that the base station switches control over an established cell to the second RNC; and
when the control over the cell established by the base station is switched to the second RNC, performing, by the local end, a software upgrade procedure.

## Patentansprüche

1. Verfahren zur Aktualisierung einer Funknetzsteuerung, **dadurch gekennzeichnet, dass** das Verfahren Folgendes umfasst:
Bestimmen (102), durch eine erste zu aktualisierende Funknetzsteuerung, RNC (radio network Controller), einer zweiten RNC aus mehreren sekundären Homing-RNCs, wobei die erste RNC einen Dienst für eine Basisstation bereitstellt und die mehreren sekundären Homing-RNCs Übertragungsverbindungen mit der Basisstation aufrechterhalten;
Wechseln (104), durch die erste RNC, der Steuerung der Basisstation zu der zweiten RNC, sodass die zweite RNC eine Zellen-Setup-Nachricht gemäß einem an der zweiten RNC konfigurierten Zellparameter an die Basisstation sendet, sodass die Basisstation die Steuerung einer festgelegten Zelle zu der zweiten RNC wechselt; und
wenn die Steuerung der durch die Basisstation festgelegten Zelle zu der zweiten RNC gewechselt ist, Durchführen (106) eines Software-Aktualisierungsvorgangs durch die erste RNC.

2. Verfahren nach Anspruch 1, wobei das Verfahren ferner Folgendes umfasst:
nachdem der Software-Aktualisierungsvorgang der ersten RNC beendet ist, Senden einer Aktualisierungsbeendigungsnachricht an die zweite RNC, sodass die Steuerung der Basisstation in Batches zurück zu der ersten RNC gewechselt wird.

3. Verfahren nach Anspruch 1, wobei vor dem Bestimmen, durch eine erste zu aktualisierende Funknetzsteuerung, RNC, einer zweiten RNC aus mehreren sekundären Homing-RNCs, das Verfahren ferner Folgendes umfasst:
Synchronisieren, durch die erste RNC und die mehreren sekundären Homing-RNCs, von Konfigurationsinformationen der Basisstation der ersten RNC, wobei die Konfigurationsinformationen der Basisstation zumindest einen Parameter der durch die Basisstation festgelegten Zelle umfassen.

4. Verfahren nach Anspruch 1, wobei vor dem Durchführen eines Software-Aktualisierungsvorgangs durch die erste RNC das Verfahren ferner Folgendes umfasst:
Reduzieren, durch die erste RNC, einer Lastaufteilungsschwelle der ersten RNC;
wenn eine Dienstanforderung empfangen wird, wenn Last die aktuelle Lastaufteilungsschwelle der ersten RNC überschreitet, Bestimmen, durch die RNC, einer dritten RNC gemäß aktuellen Laststatuswerten der mehreren sekundären Homing-RNCs;
Senden, durch die erste RNC, einer Ressourcenanwendungsanforderung an die dritte RNC, wobei die Ressourcenanwendungsanforderung Dienstinformationen der Dienstanforderung trägt; und
wenn eine durch die dritte RNC gesendete Antwort auf die Ressourcenanwendungsanforderung empfangen wird, Weiterleiten der Dienstanforderung an die dritte RNC, sodass die dritte RNC die Dienstanforderung verarbeitet.

5. Verfahren zur Aktualisierung einer Funknetzsteuerung, **dadurch gekennzeichnet, dass** das Verfahren Folgendes umfasst:
Erhalten (202), durch eine zweite Funknetzsteuerung, RNC, von Steuerung einer Basisstation, die eine erste zu aktualisierende RNC anpeilt, wobei die erste RNC einen Dienst für die Basisstation bereitstellt und die zweite RNC eine Übertragungsverbindung mit der Basisstation aufrechterhält; und Steuern (204) der Basisstation durch die zweite RNC gemäß einem an der zweiten RNC konfigurierten Zellparameter, um Steuerung einer festgelegten Zelle zu der zweiten RNC zu wechseln, sodass die erste RNC einen Software-Aktualisierungsvorgang durchführt, wenn Zellsteuerungswechsel abgeschlossen ist.

6. Verfahren nach Anspruch 5, wobei das Steuern der Basisstation durch die zweite RNC gemäß einem an der zweiten RNC konfigurierten Zellparameter, um Steuerung einer festgelegten Zelle zu der zweiten RNC zu wechseln, Folgendes umfasst:
Senden, durch die zweite RNC, einer Zellen-Setup-Nachricht an die Basisstation gemäß dem an der zweiten RNC konfigurierten Zellparameter, wobei die Zellen-Setup-Nachricht den an der zweiten RNC konfigurierten Zellparameter trägt;
Empfangen, durch die zweite RNC, einer durch die Basisstation gesendeten Zellen-Setup-Erfolgsnachricht, wobei die Zellen-Setup-Erfolgsnachricht gesendet wird, wenn die Basisstation Zellsteuerung zu der zweiten RNC wechselt, wenn bestimmt wird, dass der an der zweiten RNC konfigurierte Zellparameter der gleiche ist wie ein Parameter der durch die Basisstation festgelegten Zelle; und
Einrichten eines gemeinsamen Kanals durch die zweite RNC und Senden einer Systemnachrichtaktualisierungsanforderung an die Basisstation durch den gemeinsamen Kanal, sodass, wenn die Systemnachrichtaktualisierungsanforderung empfangen wird, die Basisstation eine vorhandene Systemnachricht löscht und das Wechseln der Steuerung der Basisstation von der ersten RNC zu der zweiten RNC abschließt.

7. Verfahren nach Anspruch 5, wobei vor dem Erhalt der Steuerung einer Basisstation, die eine erste zu aktualisierende RNC anpeilt, durch eine zweite Funknetzsteuerung, RNC, das Verfahren ferner Folgendes umfasst:
Erwerben, durch die zweite RNC, von Konfigurationsinformationen der Basisstation, die die erste RNC anpeilt, wobei die Konfigurationsinformationen der Basisstation zumindest einen Parameter der durch die Basisstation festgelegten Zelle umfassen.

8. Verfahren nach Anspruch 5, wobei das Verfahren ferner Folgendes umfasst:
Empfangen, durch die zweite RNC, einer durch die erste RNC gesendeten Ressourcenanwendungsanforderung, wobei die Ressourcenanwendungsanforderung
Dienstanforderungsinformationen trägt und die Ressourcenanwendungsanforderung durch die erste RNC gesendet wird, wenn Last eine Lastaufteilungsschwelle der ersten RNC überschreitet;
Bestimmen, durch die zweite RNC gemäß Last und einer Lastaufteilungsschwelle der zweiten RNC, ob die zweite RNC einen Dienst entsprechend der Dienstanforderungsinformationen tragen kann; und wenn die zweite RNC den Dienst entsprechend den Dienstanforderungsinformationen tragen kann, Zurückschicken einer Antwort auf die Ressourcenanwendungsanforderung an die erste RNC; und
Empfangen, durch die zweite RNC, einer durch die erste RNC weitergeleiteten Dienstanforderung und Verarbeiten der Dienstanforderung.

9. Vorrichtung, **dadurch gekennzeichnet, dass** sie Folgendes umfasst: einen Sender (401), einen Empfänger (402), einen Speicher (403) und einen Prozessor (404), wobei der Sender (401), der Empfänger (402) und der Speicher (403) separat mit dem Prozessor (404) verbunden sind, der Speicher (403) Programmcode speichert und der Prozessor (404) konfiguriert ist, um den Programmcode aufzurufen, um die folgenden Vorgänge durchzuführen:
Bestimmen, durch ein lokales Ende, einer zweiten Funknetzsteuerung, RNC, aus mehreren sekundären Homing-RNCs, wobei das lokale Ende einen Dienst für eine Basisstation bereitstellt und die mehreren sekundären Homing-RNCs Übertragungsverbindungen mit der Basisstation aufrechterhalten;
Wechseln, durch das lokale Ende, der Steuerung der Basisstation zu der zweiten RNC, sodass die zweite RNC eine Zellen-Setup-Nachricht an die Basisstation gemäß einem an der zweiten RNC konfigurierten Zellparameter sendet, sodass die Basisstation Steuerung einer festgelegten Zelle zu der zweiten RNC wechselt; und
wenn die Steuerung der durch die Basisstation festgelegten Zelle zu der zweiten RNC gewechselt ist, Durchführen eines Software-Aktualisierungsvorgangs durch das lokale Ende.

## Revendications

1. Méthode de mise à niveau de gestionnaire de réseau radio, **caractérisée en ce que** la méthode comprend :
la détermination (102), par un premier gestionnaire de réseau radio, RNC, à mettre à niveau, d'un deuxième RNC à partir de multiples RNC à radioralliement secondaire, dans laquelle le premier RNC fournit un service pour une station de base, et les multiples RNC à radioralliement secondaire entretiennent des liaisons de transmission avec la station de base ;
la commutation (104), par le premier RNC, de la gestion sur la station de base vers le deuxième RNC, de sorte que le deuxième RNC envoie un message d'établissement de cellule à la station de base en fonction d'un paramètre de cellule configuré sur le deuxième RNC, de sorte que la station de base commute la gestion sur une cellule établie vers le deuxième RNC ; et
l'exécution (106), par le premier RNC, d'une procédure de mise à niveau logicielle, lorsque la gestion sur la cellule établie par la station de base est commutée vers le deuxième RNC.

2. Méthode selon la revendication 1, dans laquelle la méthode comprend en outre :
l'envoi d'un message de fin de mise à niveau au deuxième RNC, à la fin de la procédure de mise à niveau logicielle du premier RNC, de sorte que la gestion sur la station de base revient par lots vers le premier RNC.

3. Méthode selon la revendication 1, dans laquelle avant la détermination, par un premier gestionnaire de réseau radio, RNC, à mettre à niveau, d'un deuxième RNC à partir de multiples RNC à radioralliement secondaire, la méthode comprend en outre :
la synchronisation, par le premier RNC et les multiples RNC à radioralliement secondaire, d'informations de configuration de la station de base du premier RNC, dans laquelle les informations de configuration de la station de base comprennent au moins un paramètre de la cellule établie par la station de base.

4. Méthode selon la revendication 1, dans laquelle avant l'exécution, par le premier RNC, d'une procédure de mise à niveau logicielle, la méthode comprend en outre :
la diminution, par le premier RNC, d'un seuil de partage de charge du premier RNC ;
la détermination, par le premier RNC, d'un troisième RNC en fonction des états de charge actuels des multiples RNC à radioralliement secondaire, lors de la réception d'une requête de service lorsque la charge dépasse le seuil de partage de charge actuel du premier RNC ;
l'envoi, par le premier RNC, d'une requête d'application de ressources au troisième RNC, dans laquelle la requête d'application de ressources transporte des informations de service de la requête de service ; et
le transfert de la requête de service vers le troisième RNC, de sorte que le troisième RNC traite la requête de service, lorsqu'une réponse de requête d'application de ressources envoyée par le troisième RNC est reçue.

5. Méthode de mise à niveau de gestionnaire de réseau radio, **caractérisée en ce que** la méthode comprend :
l'obtention (202), par un deuxième gestionnaire de réseau radio, RNC, de la gestion sur une station de base dirigée vers un premier RNC à mettre à niveau, dans laquelle le premier RNC fournit un service pour la station de base, et le deuxième RNC entretient une liaison de transmission avec la station de base ; et
la gestion (204), par le deuxième RNC en fonction d'un paramètre de cellule configuré sur le deuxième RNC, de la commutation de la gestion de la station de base sur une cellule établie vers le deuxième RNC, de sorte que lorsque la commutation de la gestion de la cellule est achevée, le premier RNC exécute une procédure de mise à niveau logicielle.

6. Méthode selon la revendication 5, dans laquelle la gestion, par le deuxième RNC en fonction d'un paramètre de cellule configuré sur le deuxième RNC, de la commutation de la gestion de la station de base sur une cellule établie vers le deuxième RNC comprend :
l'envoi, par le deuxième RNC, d'un message d'établissement de cellule à la station de base en fonction du paramètre de cellule configuré sur le deuxième RNC, dans laquelle le message d'établissement de cellule transporte le paramètre de cellule configuré sur le deuxième RNC ;
la réception, par le deuxième RNC, d'un message de succès d'établissement de cellule envoyé par la station de base, dans laquelle le message de succès d'établissement de cellule est envoyé lorsque la station de base commute la gestion de cellule vers le deuxième RNC lors de la détermination que le paramètre de cellule configuré sur le deuxième RNC est identique à un paramètre de la cellule établie par la station de base ; et
l'établissement, par le deuxième RNC, d'un canal commun, et l'envoi d'une requête de mise à jour de message système à la station de base par l'intermédiaire du canal commun, de sorte que lors de la réception de la requête de mise à jour de message système, la station de base supprime un message système existant, et achève la commutation de la gestion sur la station de base du premier RNC vers le deuxième RNC.

7. Méthode selon la revendication 5, dans laquelle avant l'obtention, par un deuxième gestionnaire de réseau radio, RNC, de la gestion sur une station de base dirigée vers un premier RNC à mettre à niveau, la méthode comprend en outre :
l'acquisition, par le deuxième RNC, d'informations de configuration de la station de base dirigée vers le premier RNC, dans laquelle les informations de configuration de la station de base comprennent au moins un paramètre de la cellule établie par la station de base.

8. Méthode selon la revendication 5, dans laquelle la méthode comprend en outre :
la réception, par le deuxième RNC, d'une requête d'application de ressources envoyée par le premier RNC, dans laquelle la requête d'application de ressources transporte des informations de requête de service, et la requête d'application de ressources est envoyée par le premier RNC lorsque la charge dépasse un seuil de partage de charge du premier RNC ;
la détermination, par le deuxième RNC en fonction d'une charge et d'un seuil de partage de charge du deuxième RNC, de la possibilité que le deuxième RNC puisse transporter un service correspondant aux informations de requête de service ; et si le deuxième RNC peut transporter le service correspondant aux informations de requête de service, le renvoi d'une réponse de requête d'application de ressources au premier RNC ; et
la réception, par le deuxième RNC, d'une requête de service transférée par le premier RNC, et le traitement de la requête de service.

9. Dispositif, **caractérisé en ce qu'**il comprend : un émetteur (401), un récepteur (402), une mémoire (403) et un processeur (404), dans lequel l'émetteur (401), le récepteur (402) et la mémoire (403) sont connectés séparément au processeur (404), la mémoire (403) stocke un code de programme, et le processeur (404) est configuré pour invoquer le code de programme afin d'exécuter les opérations suivantes :
la détermination, par une extrémité locale, d'un deuxième gestionnaire de réseau radio, RNC, à partir de multiples RNC à radioralliement secondaire, dans lequel l'extrémité locale fournit un service pour une station de base, et les multiples RNC à radioralliement secondaire entretiennent des liaisons de transmission avec la station de base ;
la commutation, par l'extrémité locale, de la gestion sur la station de base vers le deuxième RNC, de sorte que le deuxième RNC envoie un message d'établissement de cellule à la station de base en fonction d'un paramètre de cellule configuré sur le deuxième RNC, de sorte que la station de base commute la gestion sur une cellule établie vers le deuxième RNC ; et
l'exécution, par l'extrémité locale, d'une procédure de mise à niveau logicielle, lorsque la gestion sur la cellule établie par la station de base est commutée vers le deuxième RNC.
